# EUROPEAN PATENT APPLICATION

(11) **EP 4 230 450 A1**
(43) Date of publication of application: **23.08.2023**
(21) Application number: 22305176.4
(22) Date of filing: 17.02.2022
(51) Int. Cl.: B60H 1/00, B60H 3/06, B01D 46/00

(54) **METHOD FOR OPERATING A CABIN AIR FILTRATION SYSTEM OF A VEHICLE, COMPUTER PROGRAM, ELECTRONIC CONTROL UNIT, CABIN AIR FILTRATION SYSTEM AND VEHICLE**

(71) Applicant: MANN+HUMMEL GmbH, 71636 Ludwigsburg (DE)
(72) Inventor: MICHAUD, Jérôme, 35500 VITRE (FR); RIMBAULT, Vincent, 53000 LAVAL (FR); ZENNER, Julien, 53940 Ahuille (FR)
(74) Representative: Mann + Hummel Intellectual Property

(57) **Abstract**

A method for operating a cabin air filtration system (12) with an air filter device (20) for filtering an air flow (38) into the cabin (14), which air flow is composed of fresh air from outside and recirculated air from inside the cabin (14), wherein a magnitude of the air flow through the air filter device is adjustable, wherein a recirculation ratio of fresh air and recirculated air of the air flow through the air filter device is adjustable, and wherein a total influx (22) of air from outside is enterable into the cabin as a filtered influx (26) through the air filter device (20) and as an unfiltered infiltration influx (28) bypassing the air filter device. The method comprises the steps
A) providing system information which links
- at least one characteristic of the air filter device comprising information on a global filtration efficiency for the total influx of air from outside into the cabin,
- the magnitude of the air flow through the air filter device,
- a vehicle speed, and
- the recirculation ratio of fresh and recirculated air;

B) providing a required vehicle filtration efficiency;
C) determining from the system information for the current vehicle speed and the current magnitude of the air flow a recirculation ratio of fresh and recirculated air, such that the global filtration efficiency corresponds to the required vehicle filtration efficiency provided in step B), and operating the cabin air filtration system at this recirculation ratio.

## Description

### Technical field

The present invention refers to a method for operating a cabin air filtration system of a vehicle, wherein the cabin air filtration system comprises an air filter device for filtering an air flow into the cabin, which air flow is composed of fresh air from outside and recirculated air from inside the cabin, wherein a magnitude of the air flow through the air filter device is adjustable and wherein a ratio of fresh air and recirculated air of the air flow through the air filter device is adjustable.

### Background

Such a cabin air filtration system is known from WO 2018/224299 A1. The system according to WO 2018/224299 A1 comprises three filter elements some of which can selectively be bypassed. Furthermore, a ratio of fresh air and recirculated air is adjustable.

Generally, existing strategies used for control of HVAC-systems (Heating, Ventilation and Air Conditioning) are calculating blower speed and an air recirculation ratio for thermal and acoustic comfort or humidity management. Sometimes air quality is addressed by closing a flap in 100 % recycling/recirculation mode. It is further known that air conditioning can increase energy consumption of a vehicle.

For instance, it is relevant to address the humidity management after cold start as a higher priority, to avoid fogging, and even to achieve a defrost function of the windshield. Fog or frost on the windshield compromises visibility for the driver and thus influences driving safety. In cold conditions 100 % cold air from exterior (colder air has a lower content of humidity) or an air conditioning upstream a heater can be used to dry the air. In hot conditions, air conditioning can only be used together with 100 % recycling mode, in order to dry the air and in the same time lower its temperature. As those strategies are only employed a few minutes after cold start, they are generally combined with maximum air flow, and thus generating high levels of noise. Since their effects are relevant for security, higher noise emissions are usually accepted. During cruising, the air flow is typically limited to around 50 % of the maximum air flow due to acoustic constraints.

US 2012/0009859 A1 discloses a system and method of selecting air intake between 100 % fresh air mode and 100 % recirculated air mode for optimum heating/cooling performance, fuel economy and/or high voltage (HV) battery power consumption. The system and method include a partial recirculation control strategy in which an air inlet door is moved progressively to any position by taking into account cooling/heating loads and cabin fogging probability. As cooling/heating loads increase the air inlet door moves toward 100 % recirculation mode. As fogging probability increases the air inlet door moves toward 100 % fresh air mode. By selectively choosing a position between 100 % recirculation and 100 % fresh air, fuel economy and/or HV battery power consumption is optimized without compromising passenger comfort or causing fogging on interior glass surfaces.

US 2004/0065204 A1 describes an air quality monitoring arrangement of an enclosed cab of an agricultural tractor used for towing or carrying spraying implements for treating crop with substances which might be toxic or otherwise harmful to people. A signal from a contaminant sensor is sent to a control arrangement which compares the actual sensed contamination of the air within the cab over time with a value from a performance map representing the performance expected from normal performance of the air circulating system of the cab. When the sensed contamination is higher than that of the performance map the operator is warned of a malfunction. The blower of the air circulating system may have its speed increased so as to pressurize the cab so as to exclude the entry of contaminated air through seals and other small openings of the cab. The air filters used are coded and recognized by the control system which keeps track of the service time of the filters and warns an operator when the service time exceeds that of a stored time value related to the particular filter.

It is an object of the invention to fulfill air quality requirements inside a cabin of a vehicle with minimal energy consumption.

This is achieved by a method for operating a cabin air filtration system of a vehicle according to claim 1, a computer program for controlling a cabin air filtration system of a vehicle according to claim 22, an electronic control unit for a cabin air filtration system of a vehicle according to claim 24 and a cabin air filtration system according to claim 26 and a vehicle according to claim 27. Advantageous embodiments are given in the subclaims and the description.

### Disclosure of the invention

In accordance with the invention, a method for operating a cabin air filtration system of a vehicle is provided. The vehicle is preferably a passenger car, a van or a bus.

The cabin air filtration system comprises an air filter device for filtering an air flow into the cabin. The air flow through the air filter device is composed of fresh air from outside and recirculated air from inside the cabin. In other words, fresh air from outside as well as recirculated air from inside the cabin are filtered in the air filter device and blown (back) into the cabin. The air filter device comprises at least one air filter element.

A magnitude of the air flow through the air filter device is adjustable. A blower device may be employed to this end. The magnitude of the air flow describes the amount of fresh and recirculated air which is filtered in the air filter device and may be measured as volume or mass per time.

A ratio of fresh air and recirculated air of the air flow through the air filter device is adjustable. As outlined above, the air flow through the air filter device is composed of fresh and recirculated air. The portion of these two components can be adjusted to be only fresh air, only recirculated air or some ratio in between. The adjustment of the recirculation ratio of fresh and recirculated air can preferably be made continuously. A flow ratio adjustment device may be employed to this end.

A total influx of air from outside may enter the cabin as a filtered influx through the air filter device and as an unfiltered infiltration influx bypassing the air filter device. The filtered influx is the fresh air which passes through the air filter device and is filtered therein. The unfiltered infiltration influx enters the cabin without passing through the air filter device. The unfiltered infiltration influx may infiltrate the cabin e.g., through seals of openings (such as doors or windows), wires or hoses in particular on a front side of the vehicle, since those seals are never perfectly tight. As the unfiltered infiltration influx does not pass through the air filter device it carries contaminants (e.g. particles of various size, harmful gases, odors etc.) into the cabin.

In a step A) of the method, system information is provided which links
- at least one characteristic of the air filter device comprising information on a global filtration efficiency for the total influx of air from outside into the cabin,
- the magnitude of the air flow through the air filter device,
- a vehicle speed, and
- the ratio of fresh and recirculated air.

The global filtration efficiency depends on the magnitude of the air flow through the air filter device and the vehicle speed and the ratio of fresh and recirculated air as variables. The relation of these values is contained in the system information. The magnitude of the unfiltered infiltration influx may depend in particular on the vehicle speed and the magnitude of the air flow through the air filter device. The magnitude of the unfiltered infiltration influx in dependence from these values may explicitly or preferably implicitly be contained in the system information. The global filtration efficiency could also be called "global effective apparent cabin filtration efficiency".

The system information may be obtained from experiments and/or simulations. The system information may be provided for different pollutants, i.e. the respective relation of the aforementioned values may be contained in the system information for different pollutants. The system information describes functional interdependencies of the cabin air filtration system, which are particularly relevant.

The global filtration efficiency is not the pure physical separation efficiency that the filter device exhibits for the filtered influx but a resulting filtration efficiency that both takes into account the actually filtered volume flows (filtered influx) and the estimated influence of unfiltered volume flows (unfiltered infiltration influx) that has a negative effect on the actually achievable "resulting", "real" or "effective" filtration efficiency. In particular, the global filtration efficiency contains at least a dependency to the vehicle speed, recirculation ratio, magnitude of air flow through the air filter device.

In a step B) of the method, a required vehicle filtration efficiency is provided. In particular, the required vehicle filtration efficiency specifies how much of the content of a pollutant contained in the fresh air needs to be removed from the total influx in order to achieve a given air quality inside the cabin. This required vehicle filtration efficiency is based on the air quality outside and required air quality inside the cabin. The required vehicle filtration efficiency could also be called "global objective apparent cabin filtration efficiency". The required filtration efficiency may (directly or indirectly) be provided by a user of the vehicle or by an electronic control unit of the cabin air filtration system.

In a step C), a recirculation ratio of fresh and recirculated air is determined from the system information for the current vehicle speed and the current magnitude of the air flow through the air filter device, such that the global filtration efficiency corresponds to the required vehicle filtration efficiency provided in step B), and the cabin air filtration system is operated at this recirculation ratio. By evaluating the system information, just as much recirculated or fresh air needs to be used as is required in order to obtain a desired air quality inside the cabin. In particular, the energy consumption for cooling or heating can be minimized by using as much recirculated air as possible, while still maintaining the required air quality inside the cabin.

Particularly, the method according to the invention may ensure that the global filtration efficiency is always larger, at least equal or as close as possible to the required vehicle filtration efficiency:
- If a main objective is to protect the filter lifetime (e.g. of a HEPA-filter element of the filter device), the global filtration efficiency should not be higher than the required filtration efficiency. In closed loop control on the targeted efficiency, it is possible that the air quality target can be met, while targeting a longer filter lifetime.
- If a main objective is to reach the best or best reasonable air quality, the global filtration efficiency should be higher than or at least equal to the required filtration efficiency. This is typically the case in an open loop operation.
- Under certain circumstances (e.g. open window, bad sealing on doors etc.), it might happen that the target in efficiency cannot be met. However, the global filtration efficiency will be as close to the required filtration efficiency as possible.

The system information may comprise a multidimensional data array with the recirculation ratio of fresh and recirculated air as an output value. The other parameters (e.g. global filtration efficiency, magnitude of the air flow through the air filter device, vehicle speed) of the data array serve as input parameters, i.e. the data array is evaluated for the current values of these parameters. In this way, the system information may readily be established and evaluated. Typically, the data array is stored in an electronic control unit of the cabin air filtration system. The data array may be represented in form of maps or characteristic diagrams.

Linked data as used herein may refer to data that is functionally related, for example, at least one characteristic of the air filter device (e.g., a data point of global filtration efficiency) may be related to specific magnitude of the air flow, vehicle speed and ration of fresh and recirculated air. A plurality of such data points may be linked, e.g., in a database, a matrix, a multidimensional array, a map, a graph, or a combination thereof.

Preferably, an interpolation scheme is used for determining the recirculation ratio of fresh and recirculated air. This allows for an efficient and precise evaluation of the system information, if an input value (e.g. vehicle speed, magnitude of the air flow, recirculation ratio) deviates from the values with which the data array was created.

An advantageous variant of the method is characterized in that in predefined time intervals the recirculation ratio of fresh and recirculated air is determined and that the flow ratio is adjusted to this ratio. This ensures that the operation of the cabin air filtration system is always close to the optimum. The time interval is chosen such that the relevant input parameters typically do not change excessively between two successive evaluations. The time interval is preferably at least 0,5 s and/or at most 10 s. In particular, the time interval may be 1 s.

Preferably, the system information is provided for different pollutants, in particular for particulates of different size ranges. This allows for a more precise determination of the recirculation ratio. In particular, the recirculation ratio may be determined such that for each of the different pollutants (as PM1, PM2.5, PM10, PM0.1, or even UFP, for instance) the required filtration efficiency is achieved.

Preferably, the system information is updated upon installation of a new air filter element into the air filter device. This ensures that the system information is up to date, if for instance a better or a cheaper filter element is installed. The new system information may be provided with the new air filter element. The update information might be comprised in an RFID-chip, NFC-chip or barcode of the new air filter element. The new air filter element might provide information on how and/or where to obtain the updated system information, e.g. a download link, which is accessible for a control unit of the cabin air filtration system. The control unit of the cabin air filtration system may read the information provided with the new filter element, e.g. using an RFID-reader in a housing of the filter element. An NFC-reader might be installed outside the housing of the filter element. A barcode might be read by a barcode reader attached to a diagnosis tool connected to an onboard-diagnosis port of the vehicle. In a variant, the updated system information may be provided by a mechanic upon installation of the new filter element via an onboard diagnosis port or via a mobile communications system of the vehicle.

The system information may consider an age of the vehicle and/or an age of an air filter element of the air filter device. Upon aging the leakage from outside which bypasses the air filter device may increase and/or a filtration efficiency of the air filter device may decrease. These effects can be established beforehand and implemented in the system information in order to ensure the best possible operation conditions of the cabin air filtration system, even after the vehicle or air filter device has undergone degradation.

Preferably, the required filtration efficiency is provided depending on a geo-localization of the vehicle. This allows taking into account that the air pollution differs between different places, e.g. a city center or a mountain road. In areas with better air quality, generally, a lower vehicle filtration efficiency is required to ensure reasonable air quality inside the cabin.

A preferred variant of the method is characterized in that the required filtration efficiency is provided depending on an environmental pollution measurement. This allows for particular precise operation of the cabin air filtration system. The environmental pollution may be obtained from a public measurement service and/or from an external air quality sensor of the cabin air filtration system.

Preferably, the required filtration efficiency is determined such as to comply with different predefined limits for different pollutants, in particular particulates of different size ranges (as PM1, PM2.5,
PM10, PM0.1, or even UFP, for instance). The predefined limits may specify an amount of the respective pollutants in the air inside the cabin. This ensures that no pollutant is present inside the cabin in an excessive amount.

The required filtration efficiency may be provided depending on a setting of an electronic control unit of the cabin air filtration system. In particular, the setting of the electronic control unit is adjustable by a user and/or by an automatic control. In doing so, the respective needs can be considered.

In an advantageous variant of the method, an occupancy of the vehicle is considered for determining the recirculation ratio of fresh and recirculated air in step C). More occupants emit more moisture and more CO2. Thus, the maximum recirculation ratio might be limited in order to ensure that sufficient oxygen is present. Likewise, depending on the temperature and humidity outside, there might be restrictions for the recirculation ratio to ensure sufficient drying of the air inside the cabin.

Preferably, an energy management information of the vehicle is considered for determining the recirculation ratio of fresh and recirculated air in step C). In particular, if the vehicle is an (hybrid) electric vehicle, the energy management information may contain a charge level of a traction battery of the vehicle. In this variant, a lower air quality might be accepted if the energy level is low, in order to increase the remaining cruising range.

It might be provided that the operation of the cabin air filtration system at the recirculation ratio according to step C) is interrupted by periods of operation of the cabin air filtration system at an air recirculation ratio provided from a prioritized strategy, in particular for defogging, defrosting, speed venting or energy saving. This allows to overrule the described method which balances air quality and energy consumption under certain circumstances. For instance, defogging and defrosting are safety critical, thus, air quality and energy consumption should not impair these functions. Likewise, speed venting (e.g. after the vehicle was parked in the sun) is crucial for comfort and keeping the driver's attention high. Therefore, these tasks may be prioritized higher than air quality and energy saving. On the other hand, energy consumption might have the highest priority if the vehicle might fail to reach its target destination.

The air filter device may comprise a basic filter element for filtering the fresh air and the recirculated air, and a HEPA filter element and/or an ambient air filter element for filtering the fresh air. In other words, both the fresh air and the recirculated air are filtered by the basic filter element. Only the fresh air is filtered by the HEPA and/or ambient air filter element. Since the recirculated air was already filtered when entering the cabin as fresh air, filtering the recirculated air with the basic filter element is typically sufficient. This reduces the pressure loss for blowing the recirculated air through the air filter device. Hence, energy consumption is reduced. Filtering the fresh air with the additional HEPA and/or ambient air filter element ensures best air quality inside the cabin.

Preferably, the ambient air filter element is located upstream the HEPA filter element. In this way, the ambient air filter element may protect the HEPA filter element from large particles. This contributes to extend the service life of the HEPA filter element.

Further, the basic filter element and/or the ambient air filter element may comprise at least one adsorbent, in particular activated carbon. The adsorbent may remove harmful gases or odors from the filtered air. Activated carbon is particularly efficient in this regard.

The cabin air filtration system may comprise a cabin air quality sensor and/or an external air quality sensor. The cabin air quality sensor allows providing the required vehicle filtration efficiency in a particular precise way. Further, a closed loop control of the air quality inside the cabin is possible using the cabin air quality sensor. This allows precisely meeting air quality specifications, such as limits for different pollutants. The external air quality sensor allows for a precise prediction of the amount of pollutants entering the cabin either as filtered influx or as unfiltered infiltration influx. Thus, the required recirculation ratio can be precisely provided such that the amount of pollutants entering the cabin from outside is kept at an acceptable level.

Preferably, the method provides that the fresh air flow through the air filter device passes or bypasses the HEPA filter element and/or the ambient air filter element depending on a measurement of the cabin air quality sensor and/or the external air quality sensor and/or an estimate of the air quality outside and/or inside the cabin. In case the air quality inside the cabin is measured or estimated, the fresh air flow may be filtered by the basic filter element only, if the air quality in the cabin fulfils a predefined criterion. In case the air quality outside the cabin is measured or estimated, depending on the established outside air quality, it can be decided if there is a need for filtering the fresh air with the HEPA and/or ambient air filter element or if their service life can be extended by bypassing one or both of them. An estimate of the air quality outside may be obtained from an (especially cloud based) environmental information system.

Preferably, the required filtration efficiency is provided depending on a measurement of the cabin air quality sensor and/or the external air quality sensor and/or the estimate of air quality outside and/or inside the cabin. This allows providing the required vehicle filtration efficiency in a particular precise way. Further, a closed loop control of the air quality inside the cabin is possible using a measurement or estimate of the air quality inside the cabin. This allows precisely meeting air quality specifications, such as limits for different pollutants. The measurement or estimate of air quality outside the cabin allows for a precise prediction of the amount of pollutants entering the cabin either as filtered influx or as unfiltered infiltration influx. Thus, the required recirculation ratio can be precisely provided such that the amount of pollutants entering the cabin from outside is kept at an acceptable level.

The method may provide that an air quality index or a remaining service life of an air filter element is notified, in particular based on measurements of the cabin air quality sensor. The remaining service life may be given as a span of time and/or as a message that replacement of an air filter element is required. Timely replacement of the air filter element (in particular the basic, HEPA and/or ambient air filter element) ensures proper function of the cabin air filtration system and that the system information does not excessively deviate from properties of the installed (aged) filter element. The air quality index is typically calculated using a formula combining amounts of different pollutants, such as for instance PM1, PM2.5, PM10, NO2, O3 and the number of fine and ultrafine particles. The air quality index could be based for instance on the US-EPA2016 standard. Notifying the air quality to a user of the vehicle may increase quality perception of the vehicle.

Preferably, the at least one characteristic of the air filter device further comprises information on
- an efficiency curve of a filter medium of the air filter device,
- a type of the filter medium,
- a pressure loss of the air filter device depending on the magnitude of the air flow through the air filter device, and/or
- a dust capacity of the air filter device.

The efficiency curve may be given for different pollutants, e.g. particles of different sizes and/or different concentrations of harmful gases. If the air filter device comprises a plurality of air filter elements, an efficiency curve may be given for the filter element of each of the respective air filter elements. The type of the filter medium may specify if the air filter medium contains nano fibers and/or an adsorbent such as activated carbon; it may also specify a HEPA class of the filter medium. The pressure loss may be given dependent on an (expected) dust load of the filter medium. This additional information can be used for a particularly precise provision of the required vehicle filtration efficiency.

The invention further relates to a computer program for controlling a cabin air filtration system of a vehicle, wherein the cabin air filtration system comprises an air filter device for filtering an air flow into the cabin, which air flow is composed of fresh air from outside and recirculated air from inside the cabin, wherein a magnitude of the air flow through the air filter device is adjustable, wherein a ratio of fresh air and recirculated air of the air flow through the air filter device is adjustable, and wherein a total influx of air from outside may enter the cabin as a filtered influx through the air filter device and as an unfiltered infiltration influx bypassing the air filter device. The computer program comprises commands, which cause an electronic control unit of the cabin air filtration system, on which the computer program is executed, to determine a recirculation ratio of fresh and recirculated air from system information which links
- at least one characteristic of the air filter device comprising information on a global filtration efficiency for the total influx of air from outside into the cabin,
- the magnitude of the air flow through the air filter device,
- a vehicle speed, and
- the ratio of fresh and recirculated air,
such that the global filtration efficiency corresponds to a required vehicle filtration efficiency for a current vehicle speed and a current magnitude of the air flow and to operate the air filtration system at this ratio.

In other words, the computer program comprises commands to perform step C) of the method according to the invention as described above. The computer program facilitates execution of the method according to the invention. Preferably, the computer program is executed on an electronic control unit according to the invention as described below, in particular wherein the electronic control unit is part of a cabin air filtration system according to the invention as described further below.

The system information may be implemented in the computer program or retrieved from a database. To achieve the latter, the computer program may comprise commands, which cause the electronic control unit to access an external data base, e.g. via a mobile communications system.

The computer program may be stored in an internal memory of the electronic control unit. Alternatively, the computer program may be stored on a computer-readable storage medium. The invention also relates to a computer readable storage medium, on which the computer program is stored.

Preferably, the computer program further comprises commands, which cause the electronic control unit, on which the computer program is executed, to determine the required filtration efficiency. In other words, the computer program comprises commands to perform step B) of the method according to the invention as described above. This further facilitates the execution of the method according to the invention.

Furthermore, the invention relates to an electronic control unit for a cabin air filtration system of a vehicle, wherein the cabin air filtration system comprises an air filter device for filtering an air flow into the cabin, which air flow is composed of fresh air from outside and recirculated air from inside the cabin, wherein a magnitude of the air flow through the air filter device is adjustable, wherein a ratio of fresh air and recirculated air of the air flow through the air filter device is adjustable, and wherein a total influx of air from outside may enter the cabin as a filtered influx through the air filter device and as an unfiltered infiltration influx bypassing the air filter device. The electronic control unit is configured to determine a recirculation ratio of fresh and recirculated air from system information which links
- at least one characteristic of the air filter device comprising information on a global filtration efficiency for the total influx of air from outside into the cabin,
- the magnitude of the air flow through the air filter device,
- a vehicle speed, and
- the ratio of fresh and recirculated air,
such that the global filtration efficiency corresponds to a required filtration efficiency for a current vehicle speed and a current magnitude of the air flow and to operate the air filtration system at this ratio.

In other words, the electronic control unit is configured to perform step C) of the method according to the invention as described above. The control unit allows for execution of the method according to the invention in a convenient and efficient way. The system information may be stored in the electronic control unit or retrieved from a remote database. To achieve the latter, the electronic control unit may be configured to access an external data base, e.g. via a mobile communications system.

Preferably, the electronic control unit is further configured to determine the required filtration efficiency. In other words, the electronic control unit is configured to perform step B) of the method according to the invention as described above. This further facilitates the execution of the method according to the invention.

The invention also relates to a cabin air filtration system comprising
- an air filter device for filtering an air flow into the cabin, which air flow is composed of fresh air from outside and recirculated air from inside the cabin;
- a blower device for adjusting a magnitude of the air flow through the air filter device;
- a flow ratio adjustment device for adjusting a ratio of fresh air and recirculated air of the air flow through the air filter device; and
- an electronic control unit according to the invention as described above.

The cabin air filtration is preferably used to perform the method according to the invention. The cabin air filtration system allows for energy efficient supply of highquality air to the cabin of a vehicle, which is equipped with the cabin air filtration system.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a vehicle having a cabin air filtration system with a basic filter element, a HEPA filter element and an ambient air filter element, wherein a filtered influx form outside is directed through all three filter elements and wherein recirculated air from inside the cabin is directed through the basic filter element only, and wherein a recirculation ratio of fresh and recirculated air is adjusted according to the invention, in a schematic sketch;
- Fig. 2: shows the vehicle from Fig. 1, wherein the fresh air passes through the ambient air filter element and the basic filter element and bypasses the HEPA filter element, in a schematic sketch;
- Fig. 3: shows a schematic flow chart of a method for operating a cabin air filtration system according to the invention;
- Fig. 4: shows a schematic map of a global filtration efficiency of the total influx of fresh air from outside, which partly passes and partly bypasses the cabin air filtration system, for particles of size PM10 and for a certain vehicle speed;
- Fig. 5: shows a schematic map as in Fig. 4 for the same vehicle speed yet for particles of size PM0.1.

### Detailed description

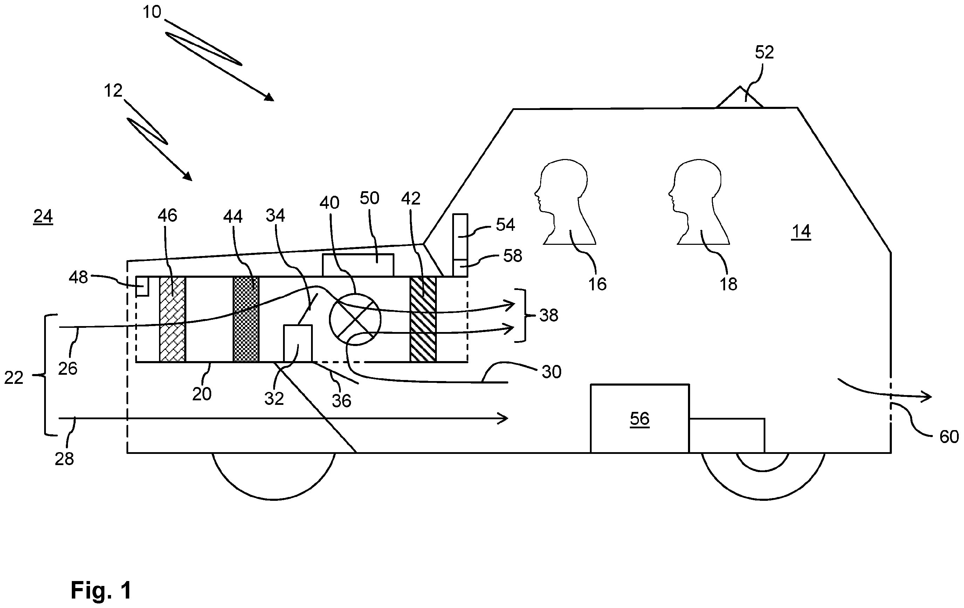

**Fig. 1** shows a vehicle **10**. The vehicle comprises a cabin air filtration system **12**. Inside the vehicle 10, a cabin **14** is formed. Occupants **16**, **18** are seated in the cabin 14.

The cabin air filtration system 12 has an air filter device **20.** A total influx **22** of fresh air from an outside environment **24** enters the cabin as a filtered influx **26,** which passes through the air filter device 20, and as an unfiltered infiltration influx **28,** which bypasses the air filter device 20.

Air from inside the cabin 14 is recirculated in a recirculation air flow **30** through the air filter device 20. A flow ratio adjustment device **32** is provided to adjust the ratio of the recirculation air flow 30 and filtered influx 26. The flow ratio adjustment device 32 is depicted here schematically with two movable flaps **34, 36.**

The filtered influx 26 and the recirculation air flow 30 together present a filtered air flow **38** through the air filter device 20. A blower device **40** is provided to adjust a magnitude of the air flow 38, which passes through the air filter device 20. The magnitude may be given as volume or mass of air per time. The magnitude of the air flow 38 may be measured by a flow meter (not depicted).

Alternatively, the magnitude of the air flow may be estimated. To this end, a voltage and current applied to the blower device 40 may be measured. Furthermore, the temperature of the air in the outside environment 24 may be measured. The density of the air outside may be measured or calculated from the temperature. Likewise, the temperature and density of the air inside the cabin 14 may be measured and/or calculated. Using this dataset the volumetric and/or mass flow rate through the blower device 40 can be determined.

In the depicted embodiment, the air filter device 20 comprises a basic filter element **42**, a HEPA filter element **44** and an ambient air filter element **46**. The basic filter element 42 and the ambient air filter element 46 may be equipped with an adsorbent such as activated carbon. Here, the recirculation air flow 30 passes solely through the basic filter element 42. The filtered influx 26 may successively pass through the ambient air filter element 46, the HEPA filter element 44 and the basic filter element 42.

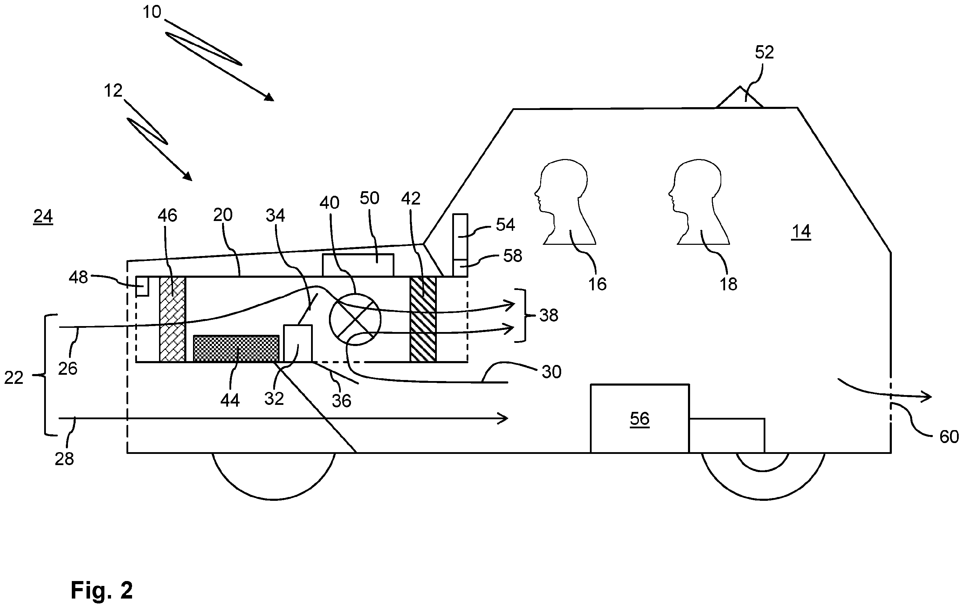

A bypass function for the filtered influx 26 from outside may be provided with regard to the ambient air filter element 46 or preferably the HEPA filter element 44. As schematically depicted **in** **Fig. 2****,** the filtered influx might for instance pass through the ambient air filter element 46 and the basic filter element 42, while bypassing the HEPA filter element **44.** An external air quality sensor **48** may be provided, to determine an index representative of the outside air quality. Based on the measurements of the external air quality sensor 48, an electronic control unit **50** may decide if the HEPA filter element **44** shall be or shall not be bypassed by the filtered influx 26.

The electronic control unit 50 further serves to control the magnitude of the air flow 38 through the air filter device 20 and the recirculation ratio, i.e. the magnitude of the recirculation air flow 30 divided by the magnitude of the filtered influx 26. A computer program according to the invention is executed on the electronic control unit 50 to this end.

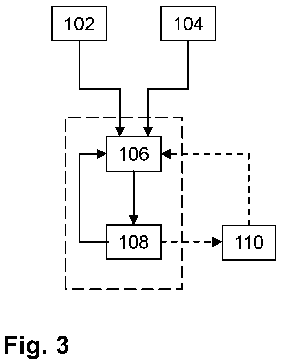

For controlling the cabin air filtration system 12, system information is provided, cf. step **102** in **Fig. 3****.** The system information links
- at least one characteristic of the air filter device comprising information on a global filtration efficiency for the total influx of air from outside into the cabin,
- the magnitude of the air flow through the air filter device,
- a vehicle speed, and
- the ratio of fresh and recirculated air.

The at least one characteristic may comprise information on
- an efficiency curve of a filter medium of the air filter device, in particular an efficiency curve for each of the basic, HEPA and ambient air filter elements 42, 44, 46,
- a type of the filter medium of the installed filter elements 42, 44, 46,
- a pressure loss of the air filter device 20 depending on the magnitude of air flow 38 through the air filter device 20, and/or
- a dust capacity of the air filter device 20, in particular for each of the basic, HEPA and ambient air filter elements 42, 44, 46.

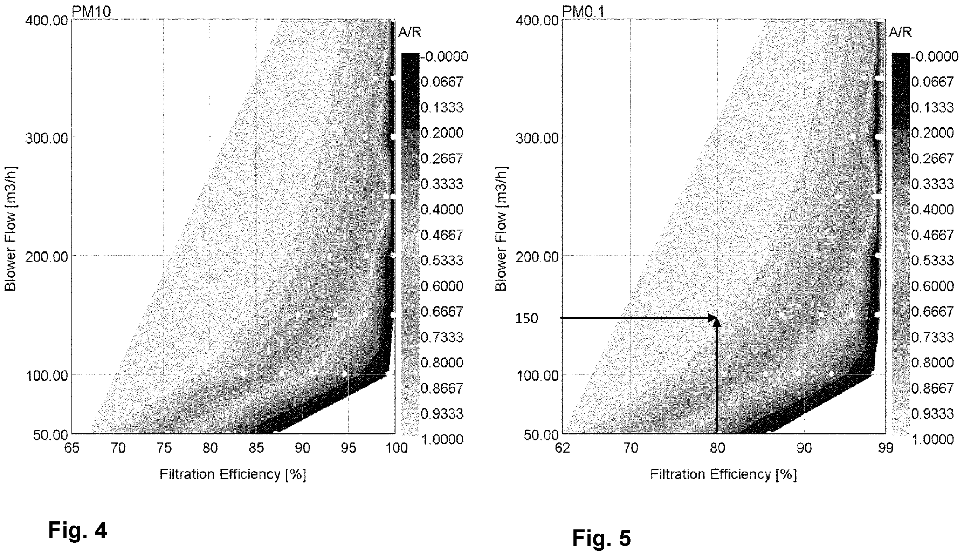

An example of such system information is depicted in **Fig. 4** and **5.** Figs. **4** and 5 show the ratio of recirculated to fresh air passing through the air filter device 20 (grey scale coded "A/R") for a certain vehicle speed (for instance 50 km/h) in dependence from the global filtration efficiency of the total influx of fresh air into the cabin (abscissa "Filtration Efficiency") and the magnitude of the filtered air flow 38 (ordinate "Blower Flow"). This information is provided for different pollutants, e.g. particulates of different size ranges, for instance particles with an aerodynamic diameter of less than 10 µm (PM10) as in Fig. 4 or particles with an aerodynamic diameter of less than 0.1 µm (PM0.1) as in Fig. 5. As exemplarily depicted in Fig. 5, in order to reach a global filtration efficiency of 80 % for PM0.1 when the magnitude of the filtered air flow 38 is 150 m3/h, the filtered air flow 38 must not comprise more than 93 % of recirculated air 30.

Corresponding information may be provided for further particle sizes and/or harmful gases such as e.g. CO2, CO, NOx etc. Further, this information is provided for different vehicles speeds, for instance 0 km/h, 30km/h, 50 km/h, 100 km/h and 150 km/h.

The information as exemplarily depicted in Figs. 4 and 5 may be given in the form of a multidimensional data array. This data array is preferably included in the electronic control unit 50 or in the computer program executed therewith.

The system information may be updated when one of the air filter elements 42, 44, 46 is replaced. The updated system information may be provided together with the new filter element, e.g. in an RFID-tag attached thereto, which may be read by an RFID-reader located at the air filter device 20. Alternatively, the new filter element may instruct the electronic control unit 50 to obtain the updated system information from a remote database, e.g. by providing a download link for instance via the RFID-tag.

The system information may comprise aging information. For instance, it might be included in the system information, to which extend the global filtration efficiency will have decreased when the filter element has been in use or a certain time.

In a step **104** a required vehicle filtration efficiency is provided. For different pollutants such as particulates of different size ranges, there might exist a set of different predefined limits. The ratio of fresh and recirculated air is determined in order to comply with these limits. For instance the predefined limits might be

| | |
|---|---|
| PM10: | less than 20 µg/m³, |
| PM2.5: | less than 20 µg/m³, |
| PM1: | less than 30 µg/m³. |

From the external air quality sensor 48 or from a public measurement service it might be known that the concentration in the ambient air outside the cabin is 10 µg/m³ for PM10, 5 µg/m³ for PM2.5 and 500 µg/m³ for PM1. Thus, in order to meet the targets for PM10 and PM2.5 no filtration requirements arise. However, to meet the target for PM1 a global filtration efficiency of 1-30/500 = 94 % is required.

Additionally or alternatively, a geo-localization of the vehicle 10 may be considered for providing the required filtration efficiency. The geo-localization may be obtained from a GPS-antenna **52.** For instance, if the vehicle 10 travels through an area, which is known for high pollution, a higher vehicle filtration efficiency might be required.

The required vehicle filtration efficiency can be adjustable by a user of the vehicle 10. For instance, the driver 16 might choose between different air quality levels, such as normal or high air quality, which are predefined in the electronic control unit 50. An input-output device **54** such as a touchscreen may be provided to this end.

Based on the required filtration efficiency provided in step 104, a recirculation ratio of fresh and recirculated air is determined in a step **106** from the system information provided in step 102 for the current speed of the vehicle 10 and the current magnitude of the filtered air flow 38, in such a way that global filtration efficiency is equal to the required vehicle filtration efficiency. If, for instance in a highly polluted environment and while a window of the vehicle 10 is open, the required vehicle filtration efficiency cannot be met, the recirculation ratio is set to achieve the highest possible global filtration efficiency. Note, that the effect of an open window or sunroof might be considered in the system information.

If the vehicle speed is between two of the speeds for which the system information is provided, an interpolation scheme may be used to establish the relevant information and to determine the required vehicle filtration efficiency. In particular, for both neighboring speeds, the multidimensional data array may be evaluated to obtain the respective recirculation ratio. A linear interpolation may be applied to the respective results, i.e. recirculation ratios, in order to obtain the recirculation ratio for the current vehicle speed.

An occupancy of the vehicle may be considered to determine the recirculation ratio in step 106. From seat occupancy sensors (not depicted), the number of occupants 16, 18 in the vehicle 10 is known. If many occupants 16, 18 are present, the portion of the recirculation air flow 30 may be limited to prevent fogging. Instead, a higher a portion of filtered influx 26 is directed through the air filter device 20.

Furthermore, an energy management information may be considered to determine the recirculation ratio in step 106. If for instance the charge level of a traction battery **56** is low, the recirculation ratio is determined such that a reasonable air quality is maintained with minimal energy consumption for heating or cooling.

In a step 108, the cabin air filtration system 12 is operated at the recirculation ratio determined in step 106. The electronic control unit 50 controls the flow ratio adjustment device 32 accordingly. Determining the recirculation ratio in step 106 and adjusting the recirculation ratio in step 108 might be repeated in predefined time intervals, e.g. every second.

Operation of the cabin air filtration according to steps 106 and 108 may be interrupted by periods of operation according to other strategies in a step **110.** For instance, defogging or speed venting might be given a higher priority than air quality after a cold start in winter or after parking in the sun in summer.

The vehicle 10 may comprise a cabin air quality sensor **58.** The quality of the air inside the cabin 14 may be notified to the occupants 16, 18 via the input-output device 54. In particular, it might be displayed if the air quality complies with the chosen air quality level. Furthermore, a remaining service life or a message, that one of the filter elements 42, 44 or 46 needs replacement may occasionally be displayed on the input-output device 54.

The measurements of the cabin air quality sensor 58 may also be used for a closed loop control of the cabin air filtration system 12. For instance, the system information might have become partly inaccurate due to a torn sealing of a door or the like. Thus, while the control scheme according to steps 102 to 108 might still be accurate at lower vehicle speeds, the unfiltered infiltration influx could be higher than expected at higher vehicle speeds. This could result in more pollutants entering the cabin 14 from outside. If this results in failing to comply with the desired air quality inside the cabin 14, the portion of the recirculation air flow 38 could be increased. It should be noted, that depending on the cause of the deviation from the desired air quality, it could also be needed to reduce the portion of the recirculation air flow 38 in order to improve the air quality inside the cabin 14.

Air from inside the cabin 14 may exit the cabin at one or more decompression outlets 60. An excessive increase of the pressure inside the cabin 14, especially at higher speeds, is thereby prevented. Further, decompressing the cabin 14 reduces the energy consumption of the blower device 40 to blow a sufficient amount of fresh air into the cabin 14.

In summary, the invention refers to a method for operating a cabin air filtration system (12) with an air filter device (20) for filtering an air flow (38) into the cabin (14), which air flow is composed of fresh air from outside and recirculated air from inside the cabin (14), wherein a magnitude of the air flow through the air filter device is adjustable, wherein a recirculation ratio of fresh air and recirculated air of the air flow through the air filter device is adjustable, and wherein a total influx (22) of air from outside may enter the cabin as a filtered influx (26) through the air filter device (20) and as an unfiltered infiltration influx (28) bypassing the air filter device. The method comprises the steps
A) providing system information which links
   - at least one characteristic of the air filter device comprising information on a global filtration efficiency for the total influx of air from outside into the cabin,
   - the magnitude of the air flow through the air filter device,
   - a vehicle speed, and
   - the recirculation ratio of fresh and recirculated air;
B) providing a required vehicle filtration efficiency;
C) determining from the system information for the current vehicle speed and the current magnitude of the air flow a recirculation ratio of fresh and recirculated air, such that the global filtration efficiency corresponds to the required vehicle filtration efficiency provided in step B), and operating the cabin air filtration system at this recirculation ratio.

The invention further relates to a computer program, an electronic control unit, which are each configured to assist in executing the method according to the invention, in particular configured to execute steps B) and preferably C). Furthermore, the invention relates to a cabin air filtration system, which is configured to execute the method according to the invention.

### List of Reference Numbers

Vehicle **10**
Cabin air filtration system **12**
Cabin **14**
Occupants **16, 18**
Air filter device **20**
Total influx **22** of fresh air from
Outside environment **24**
Filtered influx **26**
Unfiltered infiltration influx **28**
Recirculation air flow **30**
Flow ratio adjustment device **32**
Flaps **34, 36**
Filtered air flow **38**
Blower device **40**
Basic filter element **42**
HEPA filter element **44**
Ambient air filter element **46**
External air quality sensor **48**
Electronic control unit **50**
GPS-antenna **52**
Input-output device **54**
Battery **56**
Cabin air quality sensor **58**
Decompression outlet **60**
Providing **102** of system information
Providing **104** a required filtration efficiency
Determining **106** a recirculation ratio
Operating **108** the cabin air filtration system at the recirculation ratio emanating from step 106
Operating **110** the cabin air filtration system according to a prioritized strategy

## Claims

1. Method for operating a cabin air filtration system (12) of a vehicle (10),
wherein the cabin air filtration system (12) comprises an air filter device (20) for filtering an air flow (38) into the cabin (14), which air flow (38) is composed of fresh air from outside and recirculated air from inside the cabin (14); wherein a magnitude of the air flow (38) through the air filter device (20) is adjustable;
wherein a ratio of fresh air and recirculated air of the air flow (38) through the air filter device (20) is adjustable; and
wherein a total influx (22) of air from outside is enterable into the cabin as a filtered influx (26) through the air filter device (20) and as an unfiltered infiltration influx (28) bypassing the air filter device (20);
the method comprising the steps
A) providing (102) system information which links
- at least one characteristic of the air filter device (20) comprising information on a global filtration efficiency for the total influx (22) of air from outside into the cabin (14),
- the magnitude of the air flow (38) through the air filter device (20),
- a vehicle speed, and
- the ratio of fresh and recirculated air;
wherein the global filtration efficiency is determined based on the magnitude of the air flow (38) through the air filter device (20) and the vehicle speed and the ratio of fresh and recirculated air as variables,
B) providing (104) a required vehicle filtration efficiency;
C) determining (106) from the system information for the current vehicle, speed and the current magnitude of the air flow a recirculation ratio of fresh and recirculated air, such that the global filtration efficiency corresponds to the required vehicle filtration efficiency provided in step B); and operating (108) the cabin air filtration system (12) at this recirculation ratio.

2. Method according to claim 1, **characterized in that** the system information comprises a multidimensional data array with the recirculation ratio of fresh and recirculated air as an output value.

3. Method according to claim 2, **characterized in that** an interpolation scheme is used for determining the recirculation ratio of fresh and recirculated air.

4. Method according to any one of the preceding claims, **characterized in that** in predefined time intervals the recirculation ratio of fresh and recirculated air is determined and that the flow ratio is adjusted to this ratio.

5. Method according to any one of the preceding claims, **characterized in that** the system information is provided for different pollutants, in particular for particulates of different size ranges.

6. Method according to any one of the preceding claims, **characterized in that** the system information is updated upon installation of a new air filter element (42, 44, 46) into the air filter device (20).

7. Method according to any one of the preceding claims, **characterized in that** the system information considers an age of the vehicle and/or an age of an air filter element (42, 44, 46) of the air filter device (20).

8. Method according to any one of the preceding claims, **characterized in that** the required filtration efficiency is provided depending on a geo-localization of the vehicle (10).

9. Method according to any one of the preceding claims, **characterized in that** the required filtration efficiency is provided depending on an environmental pollution measurement.

10. Method according to claim 9, **characterized in that** the required filtration efficiency is determined such as to comply with different predefined limits for different pollutants, in particular particulates of different size ranges.

11. Method according to any one of the preceding claims, **characterized in that** the required filtration efficiency is provided depending on a setting of an electronic control unit (50) of the cabin air filtration system (12), in particular wherein the setting of the electronic control unit (50) is adjustable by a user and/or by an automatic control.

12. Method according to any one of the preceding claims, **characterized in that** an occupancy of the vehicle (10) is considered for determining the recirculation ratio of fresh and recirculated air in step C).

13. Method according to any one of the preceding claims, **characterized in that** an energy management information of the vehicle (10) is considered for determining the recirculation ratio of fresh and recirculated air in step C).

14. Method according to any one of the preceding claims, **characterized in that** the operation of the cabin air filtration system (12) at the recirculation ratio according to step C) is interrupted by periods of operation of the cabin air filtration system (12) at an air recirculation ratio provided from a prioritized strategy, in particular for defogging, defrosting, speed venting or energy saving.

15. Method according to any one of the preceding claims, **characterized in that** the air filter device (20) comprises
- a basic filter element (42) for filtering the fresh air and the recirculated air, and
- a HEPA filter element (44) and/or an ambient air filter element (46) for filtering the fresh air.

16. Method according to claim 15, **characterized in that**
- the ambient air filter element (46) is located upstream the HEPA filter element (44), and/or
- the basic filter element (42) and/or the ambient air filter element (46) comprise at least one adsorbent, in particular activated carbon.

17. Method according to any one of the preceding claims, **characterized in that** the cabin air filtration system (12) comprises a cabin air quality sensor (58) and/or an external air quality sensor (48).

18. Method according to claim 15 or 16, **characterized in that** the fresh air flow through the air filter device (20) passes or bypasses the HEPA filter element (44) and/or the ambient air filter element (46) depending on a measurement of the cabin air quality sensor (58) and/or the external air quality sensor (48) and/or an estimate of air quality outside and/or inside the cabin (14).

19. Method according to claim 17 or 18, **characterized in that** the required filtration efficiency is provided depending on a measurement of the cabin air quality sensor (58) and/or external air quality sensor (48) and/or the estimate of air quality outside and/or inside the cabin (14).

20. Method according to any one of claims 17 to 19, **characterized in that** an air quality index or a remaining service life is notified, in particular based on measurements of the cabin air quality sensor (58).

21. Method according to any one of the preceding claims, **characterized in that** the at least one characteristic of the air filter device (20) further comprises information on
- an efficiency curve of a filter medium of the air filter device (20),
- a type of the filter medium,
- a pressure loss of the air filter device (20) depending on the magnitude of the air flow (38) through the air filter device (20), and/or
- a dust capacity of the air filter device (20).

22. Computer program for controlling a cabin air filtration system (12) of a vehicle, wherein the cabin air filtration system (12) comprises an air filter device (20) for filtering an air flow (38) into the cabin (14), which air flow (38) is composed of fresh air from outside and recirculated air from inside the cabin (14);
wherein a magnitude of the air flow (38) through the air filter device (20) is adjustable;
wherein a ratio of fresh air and recirculated air of the air flow (38) through the air filter device (20) is adjustable; and
wherein a total influx (22) of air from outside is enterable into the cabin as a filtered influx through the air filter device (20) and as an unfiltered infiltration influx (28) bypassing the air filter device (20);
wherein the computer program comprises commands which cause an electronic control unit (50) of the cabin air filtration system (12), on which the computer program is executed, to determine a recirculation ratio of fresh and recirculated air from system information which links
- at least one characteristic of the air filter device (20) comprising information on a global filtration efficiency for the total influx (22) of air from outside into the cabin (14),
- the magnitude of the air flow (38) through the air filter device (20),
- a vehicle speed, and
- the ratio of fresh and recirculated air,
such that the global filtration efficiency corresponds to a required vehicle filtration efficiency for a current vehicle speed and a current magnitude of the air flow (38) and to operate the air filtration system (12) at this ratio.

23. Computer program according to claim 22, further comprising commands, which cause the electronic control unit (50), on which the computer program is executed, to determine the required filtration efficiency.

24. Electronic control unit (50) for a cabin air filtration system (12) of a vehicle, wherein the cabin air filtration system (12) comprises an air filter device (20) for filtering an air flow (38) into the cabin (14), which air flow is composed of fresh air from outside and recirculated air from inside the cabin (14);
wherein a magnitude of the air flow (38) through the air filter device (20) is adjustable;
wherein a ratio of fresh air and recirculated air of the air flow (38) through the air filter device (20) is adjustable; and
wherein a total influx (22) of air from outside is enterable into the cabin (14) as a filtered influx (26) through the air filter device (20) and as an unfiltered infiltration influx (28) bypassing the air filter device (20);
wherein the electronic control unit (50) is configured to determine a recirculation ratio of fresh and recirculated air from system information which links
- at least one characteristic of the air filter device (20) comprising information on a global filtration efficiency for the total influx (22) of air from outside into the cabin (14),
- the magnitude of the air flow (38) through the air filter device (20),
- a vehicle speed, and
- the ratio of fresh and recirculated air,
such that the global filtration efficiency corresponds to a required filtration efficiency for a current vehicle speed and a current magnitude of the air flow (38) and to operate the air filtration system (12) at this ratio.

25. Electronic control unit (50) according to claim 24, wherein the electronic control unit (50) is further configured to determine the required filtration efficiency.

26. Cabin air filtration system (12) comprising
- an air filter device (20) for filtering an air flow (38) into the cabin (14), which air flow is composed of fresh air from outside and recirculated air from inside the cabin (14);
- a blower device (40) for adjusting a magnitude of the air flow (38) through the air filter device (20);
- a flow ratio adjustment device (32) for adjusting a ratio of fresh air and recirculated air of the air flow (38) through the air filter device (20); and
- an electronic control unit (50) according to claim 24 or 25.

27. Vehicle comprising a cabin air filtration system according to claim 26.
